# EUROPEAN PATENT SPECIFICATION

(11) **EP 2 779 868 B1**
(45) Date of publication and mention of the grant of the patent: **22.05.2019**
(21) Application number: 12809301.0
(22) Date of filing: 09.11.2012
(51) Int. Cl.: A47B 96/06, F16B 12/22, F16B 21/09

(54) **FIXING SET FOR A PANEL**
BEFESTIGUNG FÜR EIN PANEEL
ENSEMBLE DE FIXATION POUR UN PANNEAU

(30) Priority: 15.11.2011 GB 201119713
(43) Date of publication of application: 24.09.2014
(73) Proprietor: Buttonfix Limited, Edinburgh EH20 9QH (GB)
(72) Inventor: WILLS, Anthony Arthur, London Greater London N10 1LP (GB); WATSON, Brian John, London Greater London E2 7BJ (GB); GORE, Richard Nicholas, Dublin 18 (IE); HALL, Philip Mark, London Greater London SE13 7DD (GB)
(74) Representative: EIP
(86) International application number: PCT/GB2012/052798
(87) International publication number: WO 2013/072671

(56) References cited:
- WO-A1-2006/089539
- DE-B3- 10 229 300
- FR-A1- 2 593 250

## Description

### Technical Field

The present invention relates to a secret panel fixing set for secretly fixing a panel to a substrate, such as a wall or a frame.

### Background

A secret panel fixing set may for example include two separable members, where each member can be attached to one of a panel and a substrate to allow the panel and substrate to be fastened to each other. Secret panel fixings are also known as hidden panel fixings, concealed panel fixings or discreet panel fixings.

One example of a secret panel fixing set known in the art is the keyhole plate fixing set. A keyhole plate forms one of the two separable members of a fixing set, the other member typically being a screw comprising a head connected to a threaded part that is narrower than the head. A keyhole plate is typically attached to a surface and has a first aperture through which the head of the screw may pass. The first aperture of the keyhole plate has a second aperture connected to it that has a narrower width such that it nevertheless prevents the passage of the head of the screw through the second aperture, but such that it allows the passage of the threaded part of the screw through the second aperture. The threaded part of the screw is typically screwed into a second surface such that the head of the screw and at least some of the threaded part are free of the surface.

The keyhole plate and the screw can be fastened by passing the head of the screw through the first aperture of the keyhole plate, and then providing relative movement between the keyhole plate and the screw such that the threaded part of the screw is passed through the second aperture of the keyhole plate. As the head of the screw cannot pass through the second aperture of the keyhole plate, the keyhole plate and the screw, and the surfaces they are attached to, are thus fastened. To unfasten the keyhole plate and the screw relative movement between the keyhole plate and the screw must be provided to allow the head of the screw to pass back through the first aperture of the keyhole plate. The screw needs to be carefully adjusted to get an acceptable fit.

Another example of a secret panel fixing set known in the art is the finger plate fixing set. A pair of finger plates forms a fixing set. Each finger plate comprises an abutting surface and a flange that protrudes from the abutting surface at an angle. The finger plates are each attached to a different surface such that their protruding flanges face away from the surface to which the finger plates are attached. The two finger plates may then be attached by interlocking the two protruding flanges of the finger plates. The finger plate set is attached using in total eight screws, four on each finger plate, which locate exactly opposite each other. Thus, the heads of the four pairs of screws will clash unless they are fully embedded within the finger plates. Furthermore, the engagement of the two finger plates is relatively equivocal, making it difficult for an installer to confirm that a panel is correctly fixed using the secret panel fixing set.

Examples of fixings can be seen in the publications WO 2006/089539A1 and FR 2593250A1.

It is an object of the present invention to provide an improved secret panel fixing set.

### Summary

In accordance with one aspect of the invention there is provided a secret panel fixing set for fixing a panel to a substrate, the fixing set comprising:
a retaining member and a receiving member which is engageable with the retaining member,
wherein the retaining member comprises:
   an abutting surface, which is fixable to a surface of one of a substrate and a panel that are to be fastened together; and
   one of a rib and a groove, which is formed in a plane in the retaining member which is parallel to the abutting surface of the retaining member, wherein the receiving member comprises:
      at least one abutting surface, which is fixable to a surface of the other one of the substrate and the panel that are to be fastened together;
      the other one of the rib and the groove; and
      an aperture for accommodating the retaining member,
wherein the rib is slideably insertable into the groove by movement of the retaining member relative to the receiving member in a first direction, and
wherein said other one of the rib and the groove comprises one or more elastically moveable elements shaped to provide an opening which is of reduced width compared to the maximum width of the aperture, measured parallel to the opening, the reduced-width opening being configured to provide a retaining force which inhibits the retaining member from being moved relative to the receiving member in a second direction, opposite to the first direction.

The elastically moveable elements that provide the reduced-width opening enable the provision of a retaining force that must be overcome to fasten or unfasten the two retaining and receiving members, thus significantly improving operation of the fixing set. This elastic movement when fastening or unfastening the two members and provides feedback can also be used to determine whether fastening or unfastening has successfully taken place.

The rib preferably has a width perpendicular to the plane in which the rib is formed, the width being less than 10mm. More preferably, the width of the rib is less than 5mm. Yet more preferably, the width of the rib is approximately 3mm. This allows the retaining member and receiving member of the fixing set to be of relatively small size in order to allow a panel and a substrate to be closely fastened, thus improving the compactness of the fixing, and provides a low profile protrusion when fitted to a surface. In some embodiments the receiving member may also have a low profile protrusion of approximately the same size as the retaining member.

The width of the groove of the retaining member, perpendicular to the plane in which the groove is formed, is preferably substantially equal to the width of the rib of the receiving member, perpendicular to the plane in which the rib is formed. This improves the positivity of the fit of the two members when interengaged.

The fixing set can be embodied such that said one of the rib and the groove is formed in a plane in the receiving member which is parallel to the at least one abutting surface of the receiving member. Alternatively the fixing set can be embodied such that said other one of the rib and the groove is formed in a plane in the receiving member which is perpendicular to the at least one abutting surface of the receiving member. Thus the different embodiments of the fixing set can provide flexibility in terms of how a panel and a substrate may be fastened (e.g. either such that two surfaces of a panel and a substrate are in parallel, or such that they are perpendicular).

In accordance with a further aspect of the invention there is provided a secret panel fixing set for fixing a panel to a substrate in at least two different fixing configurations, the fixing set comprising a retaining member and a receiving member,
wherein the retaining member is slideably engageable with the receiving member by movement of the retaining member relative to the receiving member, and
wherein the receiving member comprises a flange including a first abutting surface and a second abutting surface, the first abutting surface being, in a first fixing configuration of the receiving member, fixable to a surface of one of a substrate and a panel that are to be fastened together, and the second abutting surface being, in a second fixing configuration of the receiving member, fixable to a surface of one of a substrate and a panel that are to be fastened together,
wherein the receiving member comprises a support element which protrudes to one side of said flange and which comprises a third abutting surface which is abuttable, in at least one of the first and second fixing configurations, against one of the substrate and the panel, and
wherein the receiving member comprises an inwardly-projecting rib mounted on said support element, the rib being spaced from said third abutting surface such that the retaining member is slideably engageable with the receiving member in both the first and second fixing configurations.

The fixing set thus provides flexibility in terms of how it may be used to fasten a first object and a second object. The first configuration may for example comprise the top side of the flange of the receiving member being abutted to a surface on a first object whilst the top of the support element of the receiving member may also be abutted to a surface in a recess of the first object. The second configuration may for example comprise the bottom of the flange of the receiving member being abutted to a surface on a first object. In both configurations the retaining member may be fixed to the second object.

The receiving member of the fixing set is thus reversible in that it may be used in either the first or the second configuration described above.

In some embodiments the rib of the receiving member is spaced from the first abutting surface, the support element comprises a skirt inside which the rib is located, and the rib is spaced from the third abutting surface by a distance which is approximately equal to a distance by which the rib is spaced from the first abutting surface.

The spacing of the rib between the first abutting surface (e.g. the bottom of the flange) and the third abutting surface (e.g. the top of the support element) of the receiving member allows the retaining member and receiving member to be attached easily in either the first or second configuration described above, and provides space to ensure that any fixing means (e.g. screws) used to fix the retaining and receiving members to different objects do not scrape against those objects or obstruct the fastening of the two members of the fixing set.

Further features and advantages of the invention will become apparent from the following description of preferred embodiments of the invention, given by way of example only, which is made with reference to the accompanying drawings.

### Brief Description of the Drawings

Figures 1a to 1e illustrate different views of a retaining member according to various embodiments.
Figures 2a to 2e illustrate different views of a receiving member according to various embodiments.
Figures 3a to 3d illustrate different views of the retaining member of Figures 1a to 1e and the receiving member of Figures 2a to 2e being fastened, according to various embodiments.
Figures 4a and 4b illustrate different views of the retaining member of Figures 1a to 1e and the receiving member of Figures 2a to 2e being used to fasten a panel and a substrate together, according to various embodiments.
Figures 5a to 5d illustrate different views of the retaining member of Figures 1a to 1e and the receiving member of Figures 2a to 2e being fastened, according to various embodiments.
Figures 6a and 6b illustrate different views of the retaining member of Figures 1a to 1e and the receiving member of Figures 2a to 2e being used to fasten a panel and a substrate together, according to various embodiments.
Figures 7a to 7e illustrate different views of a receiving member according to various embodiments.
Figures 8a to 8d illustrate different views of the retaining member of Figures 1a to 1e and the receiving member of Figures 7a to 7e being fastened, according to various embodiments.
Figures 9a and 9b illustrate different views of the retaining member of Figures 1a to 1e and the receiving member of Figures 7a to 7e being used to fasten a panel and a substrate together, according to various embodiments.

### Detailed Description

Various embodiments relate to a secret panel fixing set including two members that can be selectively interengaged. These two members will be referred to as a retaining member and a receiving member below. The two members may be used to fasten a panel and a substrate together. The fixing set may be hidden from view once the panel and substrate are fastened, and is thus referred to as a secret panel fixing set.

A first embodiment will now be described.

In the first embodiment the retaining member has an abutting surface that is fixable to another surface. The retaining member may comprise screw-fixing means for attaching the retaining member to another surface via a screw. The screw-fixing means may for example be a screw hole which is central to the retaining member and that allows the retaining member to be fixed to another surface using a screw which is screwed through the screw hole into the surface, thus fixing the retaining member and its abutting surface to the surface.

The retaining member may be substantially rotationally symmetric, i.e. having rotational symmetry about an axis of the retaining member. Two surfaces at the end of the retaining member's axis form the top and bottom of the retaining member, and the remaining surface (i.e. the rotationally symmetric surface) of the retaining member forms its side. The abutting surface of the retaining member forms one of the top and bottom of the retaining member. The screw hole of the retaining member may pass from the top to the bottom of the retaining member and may lie substantially parallel to the axis of the retaining member. Preferably the screw hole is substantially central to the retaining member, e.g. the centre of the screw hole may substantially coincide with the axis of the retaining member.

The retaining member also includes a groove in the first embodiment. The groove is formed in a plane in the retaining member which is parallel to the abutting surface of the retaining member. Thus the groove may be formed in a plane that is parallel to the top and/or bottom of the retaining member, on the surface of the side of the retaining member.

The groove in the retaining member is preferably an annular groove. The groove is preferably substantially U-shaped in cross-section. Preferably, the bottom of the groove smoothly curves upwards to join the sides of the groove.

The top of the retaining member may comprise a curve at its edge such that the top tapers towards the side of the retaining member. The curved edge of the top of the retaining member enables the retaining member to be more easily aligned and inserted into the receiving member (e.g. into the wider aperture of the receiving member, described below).

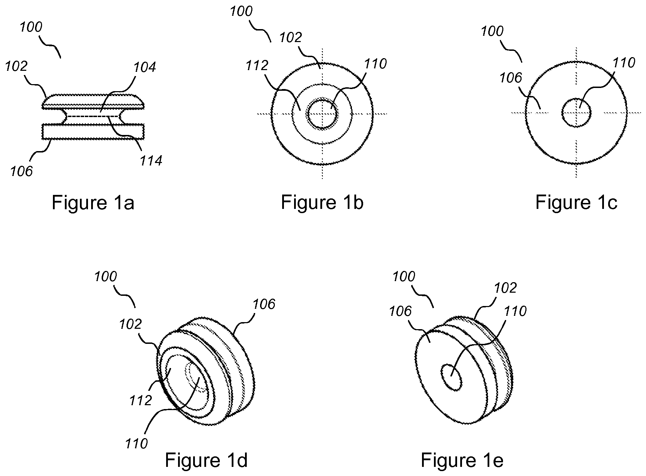

Figures 1a to 1e illustrate different views of the retaining member 100 according to various embodiments.

Figure 1a illustrates a side elevation view of the retaining member 100 according to the first embodiment. This view shows the groove 104 formed on the side of the retaining member 100 between the top 102 and bottom 106 of the retaining member 100. The bottom 106 of the retaining member 100 may form the abutting surface of the retaining member 100. This view also shows the narrowest width 114 of the groove of the retaining member 100 about the axis of the retaining member.

Figure 1b illustrates a top elevation view of the retaining member 100 according to the first embodiment. This view shows the top 102 of the retaining member 100, and the screw hole 110 that passes through the retaining member 100. A recess 112 adjacent to the screw hole 110 is provided in the top 102 of the retaining member. The recess 112 provides a space in which the head of a screw (e.g. a flat-head screw) used to fix the retaining member may rest, so that the top of the head of the screw may lie flush with the top of the head of the retaining member 100. The recess may be conical in shape to assist in centring the screw within the screw hole 110.

Figure 1c illustrates a bottom elevation view of the retaining member 100 according to the first embodiment. This view shows the abutting surface 106 of the retaining member 100, and the screw hole 110 that passes through the retaining member 100.

Figure 1d illustrates a top oblique view of the retaining member 100 according to the first embodiment. This view shows the top 102 of the retaining member 100, the screw hole 110, the recess 112 and the abutting surface 106. The groove 104 may be identified between the top 102 and abutting surface 106 of the retaining member.

Figure 1e illustrates a bottom oblique view of the retaining member 100 according to the first embodiment. This view shows the top 102 of the retaining member 100, the screw hole 110 and the abutting surface 106. The groove 104 may again be identified between the top 102 and abutting surface 106 of the retaining member.

The receiving member of the fixing set of the first embodiment will now be described.

In the first embodiment the receiving member comprises a flange that includes a first abutting surface and a second abutting surface. The first abutting surface of the flange may correspond to one side of the flange, and the second abutting surface may correspond with the other side of the flange. As will be described later, the first abutting surface or the second abutting surface may be fixed to another surface. The first or second abutting surface may be fixed to another surface via screw fixing means of the receiving member, which may for example comprise of one or more screw holes in the flange of the receiving member.

The receiving member may comprise an aperture for accommodating the retaining member. This aperture will be referred to as the accommodating aperture below.

The receiving member may comprise a rib that forms the accommodating aperture and that comprises one or more parts shaped to provide an opening which is of reduced width compared to the maximum width of the accommodating aperture as measured parallel to the opening. The reduced-width opening may have a maximum width, as measured parallel to the opening, that is less than or equal to the narrowest width 114 of the groove 104 of the retaining member 100. The rib may be formed in a plane in the receiving member which is parallel to at least one of abutting surfaces of the receiving member e.g. parallel to at least one of the abutting surfaces of the flange of the receiving member. Preferably, the tip of the rib is convex in cross-section, the convex cross-section corresponding with the U-shaped cross-section of the groove with which it interengages. This provides a degree of tolerance in the positioning of the rib in relation to the groove, when the panel is moved into position for fixing.

The opening formed by the one or more parts of the rib may be connected to the accommodating aperture in order to allow the retaining member to pass between the accommodating aperture through the opening, as will later be described. By having a width that is less than or equal to the narrowest width 114 of the groove 104 of the retaining member 100 the opening provided by the rib may provide a retaining force which inhibits the retaining member from being moved relative to the receiving member, e.g. when the retaining member is passed between the accommodating aperture through the opening, as will later be described.

The one or more elastically moveable elements of the rib that provide the reduced-width opening may be flexibly moveable to allow the reduced-width opening to be momentarily increased in width, relative to the reduced width. The one or more elastically moveable elements of the rib may be themselves elastically deformable, or may be supported on a substrate which is elastically deformable, in order to provide the flexible movement. By selecting a pre-defined level of flexibility for the one or more elastically moveable elements of the rib, the reduced-width opening provided by the rib can provide a corresponding pre-defined retaining force which inhibits the retaining member from being moved relative to the receiving member, as described above.

In the first embodiment the rib is mounted on a support element which protrudes to one side of the flange of the receiving member. The support element may for example protrude at a substantially perpendicular angle from the flange of the receiving member. The rib of the retaining member may be mounted on the support element such that it projects inwards to form the accommodating aperture of the receiving member in a plane parallel to that of the flange of the receiving member, and in order to provide the reduced-width opening described above.

A second, wider aperture may also be formed in the support element of the receiving member. The wider aperture may comprise an opening in the support element and the flange of the receiving member that is wide enough to allow the retaining member to pass through the receiving member.

The support element of the receiving member may for example comprise a skirt around the accommodating aperture, wider aperture and the rib of the retaining member.

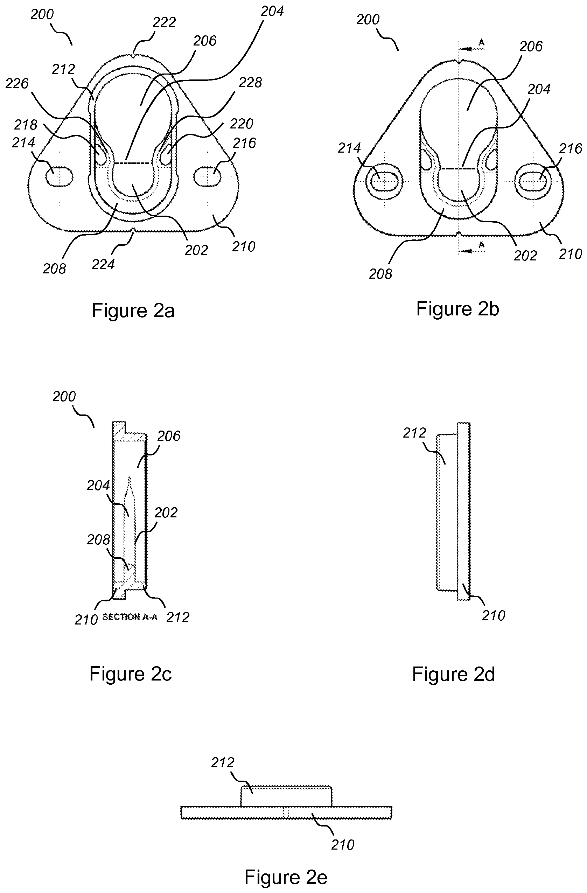

Figures 2a to 2e illustrate different views of the receiving member 200 according to the first embodiment.

Figure 2a illustrates a top elevation view of the receiving member 200 according to the first embodiment. As described above, the receiving member 200 comprises a flange 210 and a support element 212 which protrudes from said flange towards the viewpoint of Figure 2a. The top side of the flange 210, shown in Figure 2a, forms one of the first and second abutting surfaces of the receiving member 200. The wider aperture 206 is formed through the support element 212 and flange 210 of the receiving member 200.

A rib 208 is mounted on the support element 212, and as described above rib 208 projects inwards from the support element, in order to provide the reduced-width opening 204 and the accommodating aperture 202. Rib 208 comprises one or more parts (in the form of elastically moveable elements 226 and 228) that form the reduced-width opening 204. The reduced-width opening 204 provided by the rib 208 connects the accommodating aperture 202 and the wider aperture 206.

In this way, and as can be seen in Figure 2a, rib 208 projects inwards from the support element 212 and includes the reduced-width opening 204 which connects wider aperture 206 with accommodating aperture 202. The elastically moveable 226 and 228, being formed of plastic or other material of suitable elasticity, are able to spring back into position after the retaining member has been moved through the reduced-width aperture, so that the panel can be fixed and unfixed from the substrate repeatedly without significant loss of positive engagement when the panel is fixed in place.

The elastically moveable elements 226 and 228 of rib 208 that comprise the one or more parts that provide the opening 204 are formed as elastically deformable arms that are each fixed at one of their ends to the support element 212 and at their other end to the rib 208. One elastically moveable element 226 is provided on one side of the reduced width opening 204, and another elastically moveable element 228 is provided on the other side of the reduced width opening 204. Apertures 218 and 220 are provided between the elastically moveable elements 226 and 228, respectively, and the support element 212, in order to form the arms and to provide flexibility in these arms (by providing them with a narrower width than the rib).

The flange 210 of the receiving member 200 comprises fixing means in the form of two screw holes 214 and 216 that allow one of the first and second abutting surfaces of the receiving member 200 to be fixed to another surface (e.g. by screwing the receiving member 200 onto that surface using screws that are screwed through the screw holes 214 and 216).

The flange 210 of the receiving member may also comprise one or more marking points, e.g. 222 and 224 along its side. These marking points allow the receiving member 200 to be placed on a surface and for its position on the surface to be easily recorded by marking the surface (e.g. using a pencil) at the marking points 222 and 224 on the flange 210 of the receiving member.

Figure 2b illustrates a bottom elevation view of the receiving member 200 according to the first embodiment. The bottom side of the flange 210, shown in Figure 2b, forms one of the first and second abutting surfaces of the receiving member 200 (the top of the flange 210 forming the other of the first and second abutting surfaces as described above). The view shown in Figure 2b also shows wider aperture 206 through the flange 210 and the support element (not visible in Figure 2b), the reduced-width opening 204, the accommodating aperture 202, the rib 208 and screw holes 214 and 216.

Recesses adjacent to each of the screw holes 214 and 216 are provided in the bottom of the flange 210 of the receiving member 200. The recesses each provide a space in which the head of a screw (e.g. a flat-head screw) that is screwed through the corresponding screw hole may rest, so that the top of the head of the screw may lie flush with the bottom of the flange 210 of the receiving member 200. The recesses may each be conical in shape to assist in centring respective screws within the screw holes 214 and 216. Note that the recesses only provide spaces for screws that are screwed through the screw holes from the bottom side of the flange 210 (no recesses are provided on the top side of the flange in this embodiment, though they could be, as is later described in alternative embodiments).

Figure 2c illustrates a section view of receiving member 200 through the line marked "A" in Figure 2b. This view shows the rib 208 mounted on the support element 212 of the receiving member 200 such that the rib is spaced from the bottom of the flange 210 of the receiving member 200. The space between the rib and the bottom side of the flange 210, allows the rib to engage with the groove of the retaining member 100 when the bottom side of the flange 210 is used as an abutting surface of the flange 210 for fixing the receiving member 200 to another surface (i.e. space is left for either the top or bottom of the retaining member 100 to rest, when the rib is engaged with the groove).

This view also shows that the rib 208 is spaced from the top of the support element 212. The top of the support element 212 may form a third abutting surface of the receiving member 200 (i.e. as well as the two abutting surfaces of the flange 210), as will later be described in further detail. The space between the rib and the top of the support element 212 allows the rib to engage with the groove of the retaining member 100 when the top of the supporting element 212 is used as an abutting surface for fixing the receiving member 200 to another surface (i.e. space is left for either the top or bottom of the retaining member 100 to rest, when the rib is engaged with the groove).

Thus the spacing of the rib 208 from the bottom of the flange 210 and from the top of the support element 212 allows flexibility in the abutment of the receiving member 200 to other surfaces, as will later be seen in further detail.

Figure 2d illustrates a right side elevation view of the receiving member 200 according to the first embodiment. This view shows the support element 212 projecting from the flange 210 of the receiving member.

Figure 2e illustrates a front side elevation view of the receiving member 200 according to the first embodiment. This view also shows the support element 212 projecting from the flange 210 of the receiving member.

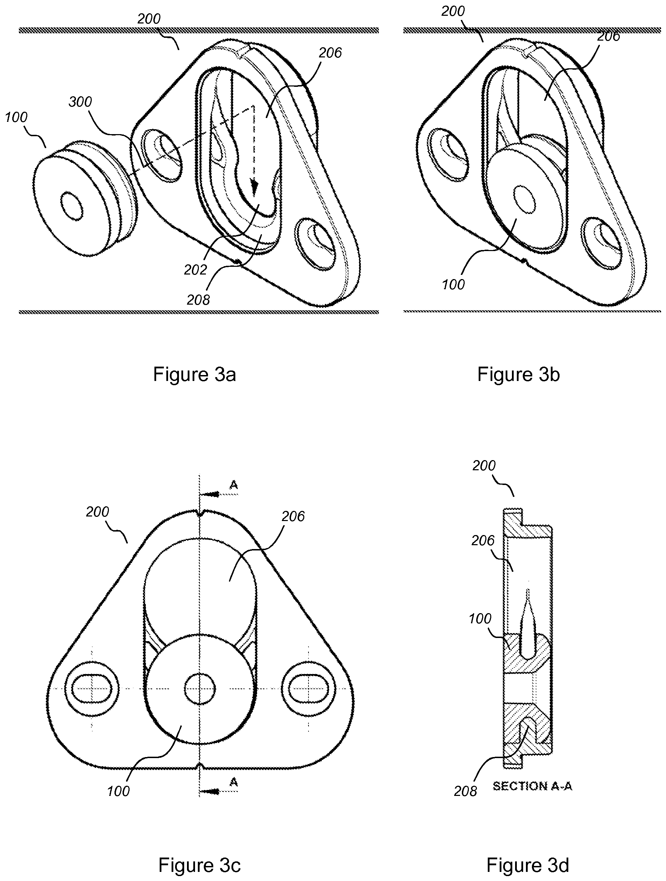

The fastening of the retaining member 100 and receiving member 200 according to the first embodiment will now be described with reference to views illustrated in Figures 3a to 3d.

Figure 3a illustrates a perspective elevation view of the retaining member 100 and receiving member 200.

In Figure 3a the dashed arrow 300 indicates the relative movement between the retaining member 100 and receiving member 200 that is required to fasten the two members, according to the first embodiment. As shown by dashed arrow 300 the two members may be fastened by inserting retaining member 100 through the bottom of flange 210 of the receiving member 200 into the wider aperture 206 of receiving member 200, and then providing movement of the retaining member 100 relative to the receiving member 200 in a first direction, such that the groove 104 of the retaining member 100 passes through the reduced-width opening 204 of the receiving member 200. Note that the axis of retaining member 100 is substantially perpendicular to the plane in which the rib 208 is formed both when the retaining member 100 is inserted into the wider aperture 206 and after the retaining member 100 has passed through the reduced-width opening 204 of the receiving member 200. The rib 208 of the receiving member 200 is thus slideably insertable into the groove 104 of the retaining member by movement of the retaining member 100 relative to the receiving member 200 in a first direction.

As the groove 104 of the retaining member 100 passes through the reduced-width opening 204 of the receiving member 200 the one or more elastically moveable elements of the rib that form the opening 204, e.g. the arms 218 and 220 described, above may flex in order to allow the retaining member 100 to pass. Thus the one or more elastically moveable elements inhibit the passage of the retaining member 100 through the reduced-width opening of the receiving member 200, but allow the retaining member 100 to pass if enough relative force is applied to the two members in the first direction.

Once the two members have been fastened as described above the groove 104 of the retaining member 100 is engaged with the rib 208 of the receiving member such that the retaining member 100 lies within the accommodating aperture 202 of the receiving member 200. The position of the retaining member 100 within the receiving member 200 is illustrated in top oblique view in Figure 3b and in a bottom oblique view in Figure 3c.

Note that once the retaining have been fastened as described above further movement of the retaining member 100 relative to the receiving member 200 in the first direction is not possible as the two members are resting against each other, with the retaining member 100 in the accommodating aperture 202 of the receiving member 200. One of the members can thus be used to support the other, e.g. in order to support a panel on a wall, as will later be described.

Once the retaining member 100 and the receiving member 200 have been fastened as described above the one or more elastically moveable elements of the rib 208 inhibit the passage of the retaining member 100 back through the reduced-width opening of the receiving member 200, i.e. they inhibit the passage of the retaining member 100 in a second direction opposite to the first direction described above. Although the passage of the retaining member 100 in the second direction is inhibited, the retaining member may still be moved in this direction if sufficient relative force is applied to the two members. Thus the two members can be unfastened by providing sufficient relative force in order to move the retaining member 100 in the second direction (opposite to the first direction).

Figure 3d illustrates a section view of retaining member 100 and receiving member 200 when fastened, the section being through the line marked "A" in Figure 3c. As can be seen in this view the groove 104 of retaining member 100 is engaged with rib 208 of the receiving member 200, with the retaining member 100 being positioned within the accommodating aperture 202 of the receiving member 200.

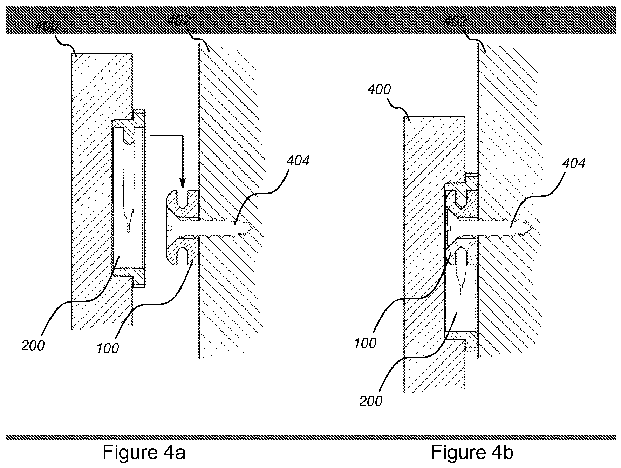

The two members of the fixing set can be used to fasten a panel and a substrate together, as summarised above. The fastening of a panel 400 to a substrate 402 such as a wall via the retaining member 100 and the receiving member 200 according to the first embodiment will now be described with reference to views illustrated in Figures 4a and 4b.

Figure 4a illustrates a section view of retaining member 100 attached to a wall 402 and receiving member 200 attached to a panel 400 when the two members are unfastened.

Retaining member 100 is fixed to wall 402 via a screw 404 that is screwed into wall 402 through the screw hole 110 of the retaining member. The head of screw 404 (e.g. a flat-head screw) rests in the recess 112 in the top of the retaining member 100. The bottom of retaining member 100, which forms the abutting surface of the retaining member 100, is thus fixed to the wall 402.

Receiving member 200 is embedded in a recess in panel 400 such that the top side of the flange 210 of the receiving member, which is one of the abutting surfaces of the flange 210 of the receiving member 200, is fixed to and abuts the panel 400. The receiving member 200 is fixed to the panel 400 via two screws (not shown) that are screwed into panel 400 through the screw holes 214 and 216 or the receiving member 200. The heads of these two screws (e.g. flat-head screws) rest in the recesses in the bottom of the flange 210 that are adjacent to each of the screw holes 214 and 216 of the receiving member 200.

The top of the support element 212 of receiving member 200, which forms a third abutting surface of the receiving member 200 (the other two abutting surfaces being those of the flange 210), also abuts a surface of the panel 400 within the recess within which the receiving member 200 is embedded.

In order to support the panel 400 when hung on the wall 402 via the fixing set, the receiving member 200 is oriented in the panel 400 such that the accommodating aperture 202 of the retaining member 200 is vertically above the wider aperture 206 of the receiving member 200, as illustrated in Figure 4a.

In order to fasten the two members 100 and 200 so that the panel 400 is hung on the wall 402, the retaining member 100 is inserted through the bottom of flange 210 of the receiving member 200 into the wider aperture 206 of receiving member 200, and then movement of the retaining member 100 relative to the receiving member 200 is provided in a first direction, as described above.

Figure 4b illustrates a section view of retaining member 100 attached to a wall 402 and receiving member 200 attached to a panel 400 when the two members are fastened.

As was shown in Figure 3d, in Figure 4b the groove 104 of retaining member 100 is engaged with rib 208 of the receiving member 200, with the retaining member 100 being positioned within the accommodating aperture 202 of the receiving member 200. As described above the receiving member 200 is oriented in the panel such that the accommodating aperture 202 is vertically below the wider aperture 206, and accommodating aperture 202 of the receiving member 200 thus hangs on the retaining member 100 which is fixed to the wall 402. The panel 400 is thus hung on the wall via receiving member 200, to which it is fixed.

As can be seen in Figure 4b, when the panel 400 and wall 402 are fastened using the retaining member 100 and receiving member 200, the bottom of the flange of the receiving member 200, which is one of the abutting surfaces of the flange 210 of the receiving member 200, abuts the wall 402. The recesses adjacent to the screw holes 214 and 216 of the receiving member 200 ensure that the screws used to fix the receiving member 200 to the panel 400 do not contact the wall 402. Without these recesses the retaining member 100 and receiving member 200 would be more difficult to fasten as the screw heads in screw holes 214 and 216 would scrape the wall 204 and/or obstruct the fastening of the two members 100 and 200.

As can also be seen in Figure 4b, when the panel 400 and wall 402 are fastened using the retaining member 100 and receiving member 200, the top of the retaining member 100 abuts the panel 400 inside the recess of the panel. The recess 112 adjacent to the screw hole 110 of the retaining member 100 ensures that the screw used to fix the retaining member 100 to the wall 402 does not contact the panel 400. Without this the retaining member 100 and receiving member 200 would be more difficult to fasten as the screw head in screw hole 110 would scrape the panel 400 and/or obstruct the fastening of the two members 100 and 200.

The fixing set is thus easily used to fasten a panel and a substrate, such as a wall, together. The spacing of the rib 208 between both the top of the support element 212 and the bottom of the flange 210 of the receiving member 200 and the recesses for the screw holes 110, 214 and 216 allows the retaining member 100 and receiving member 200 to be attached easily without the need for careful attention to whether their screws scrape the panel 400 or wall 402 and/or obstruct the fastening of the two members 100 and 200.

The one or more elastically moveable elements of the rib that provide the reduced-width opening 204 enable the provision of a retaining force that must be overcome to fasten or unfasten the two members 100 and 200. The overcoming of this force when fastening or unfastening the two members 100 and 200 provides feedback that can be used to determine whether fastening or unfastening has successfully taken place.

Finally the width of the accommodating aperture 202 provided by the rib 208 of the receiving member 200 may be slightly larger than the diameter of the retaining member 100 about the groove 104. This allows for a small amount of relative movement between the retaining member 100 and receiving member 200 once they are fastened, and for the retaining member 100 and receiving member 200 to be within a small range of relative positions when fastened. This can therefore be helpful where a plurality of fixing sets whose members have not been exactly aligned are used to fasten a panel and a substrate (each of the fixing sets may have their corresponding retaining and receiving members in slightly different positions when fastened, without introducing a large frictional that force that prevents them from later being unfastened, thus allowing the panel to be easily unfastened).

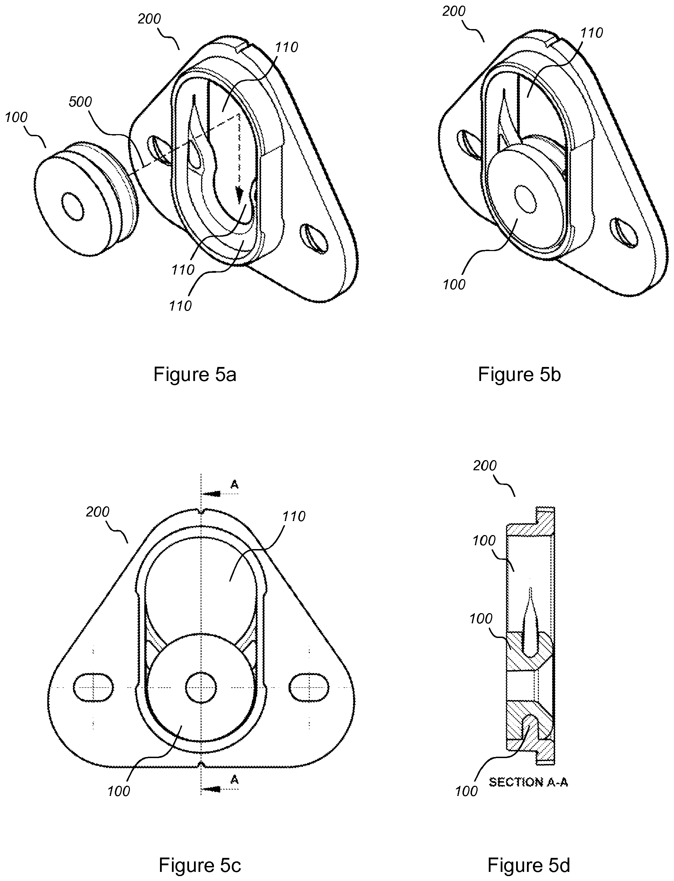

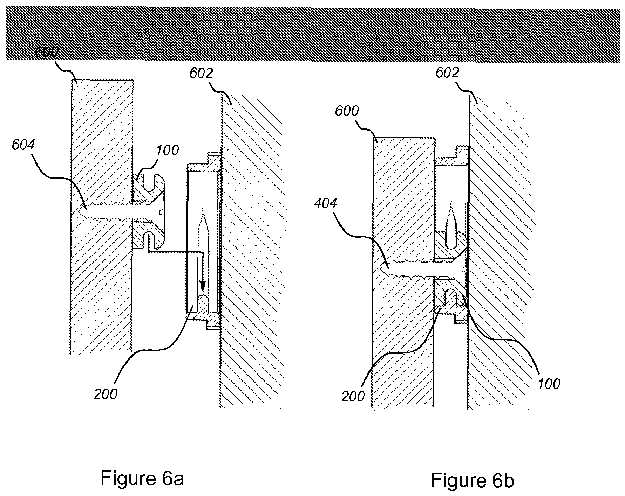

As shown in Figures 3a to 3d and 4a and 4b above, the retaining member and receiving member can be used to fasten a panel and a substrate by fixing the retaining member 100 on one object and fixing the receiving member 200 such that it is in a recess of the other object, such that the top of the flange of the receiving member 200 is abutted to the outer surface of the object, and the top of the support element of the receiving member 200 is abutted to the recessed surface of the object. The fixing set provides flexibility however in that the receiving member 200 can instead be fixed to an object such that the bottom of the flange 210 abuts the object. This alternative arrangement will now be described with reference to Figures 5a to 5d and 6a and 6b.

Figure 5a illustrates a perspective elevation view of the retaining member 100 and receiving member 200.

In Figure 5a the dashed arrow 500 indicates the relative movement between the retaining member 100 and receiving member 200 that is required to fasten the two members, according to the first embodiment. As shown by dashed arrow 500 the two members may be fastened by inserting retaining member 100 through the top of flange 210 (rather than through the bottom of the flange 210 as in the previous arrangement shown in Figure 3a) of the receiving member 200 into the wider aperture 206 of receiving member 200, and then providing movement of the retaining member 100 relative to the receiving member 200 in a first direction, such that the groove 104 of the retaining member 100 passes through the reduced-width opening 204 of the receiving member 200.

As in the previous arrangement, as the groove 104 of the retaining member 100 passes through the reduced-width opening 204 of the receiving member 200 the one or more elastically moveable elements of the rib that form the opening 204, e.g. the arms 218 and 220 described, above may flex in order to allow the retaining member 100 to pass.

Once the two members have been fastened as described above the groove 104 of the retaining member 100 is engaged with the rib 208 of the receiving member such that the retaining member 100 lies within the accommodating aperture 202 of the receiving member 200. The position of the retaining member 100 within the receiving member 200 is illustrated in a top oblique view in Figure 5b and in a top elevation view in Figure 5c.

As in the previous arrangement, note that once the retaining and receiving members 100 and 200 have been fastened as described above further movement of the retaining member 100 relative to the receiving member 200 in the first direction is not possible. One of the members can thus be used to support the other, e.g. in order to support a panel on a wall, as will later be described.

As in the previous arrangement, the two members can be unfastened by providing sufficient force in the second direction (opposite to the first direction).

Figure 5d illustrates a section view of retaining member 100 and receiving member 200 when fastened, the section being through the line marked "A" in Figure 3c. As can be seen in this view the groove 104 of retaining member 100 is engaged with rib 208 of the receiving member 200, with the retaining member 100 being positioned within the accommodating aperture 202 of the receiving member 200.

The fastening of a panel 600 to a substrate 602 such as a wall via the retaining member 100 and the receiving member 200 according to the first embodiment will now be described with reference to views illustrated in Figures 6a and 6b.

Figure 6a illustrates a section view of receiving member 200 attached to a wall 602 and retaining member 100 attached to a panel 600 when the two members are unfastened.

Retaining member 100 is fixed to panel 600 via a screw 604 that is screwed into panel 600 through the screw hole 110 of the retaining member 100. The head of screw 604 rests in the recess 112 in the top of the retaining member 100. The bottom of retaining member 100, which forms the abutting surface of the retaining member 100, is thus fixed to the panel 600.

Receiving member 200 is fixed to the wall 602 such that the bottom side of the flange 210 of the receiving member, which is one of the abutting surfaces of the flange 210 of the receiving member 200, is fixed to the wall 602. The receiving member 200 is fixed to the wall 602 via two screws (not shown) that are screwed into wall 602 through the screw holes 214 and 216 or the receiving member 200. The heads of these two screws (e.g. round-head screws) rest on top of the top of the flange 210 (as there are no recesses adjacent to the screw holes 214 and 216 on the top of flange 210).

The top of the support element 212 of receiving member 200, does not abut the wall 602 in this arrangement.

In order to support the panel 600 when hung on the wall 602 via the fixing set, the receiving member 600 is oriented on the wall 602 such that the accommodating aperture 202 of the retaining member 200 is vertically below the wider aperture 206 of the receiving member 200. Note that in the previous arrangement the receiving member 200 was oriented such that the wider aperture 206 of the retaining member 200 was vertically below the accommodating aperture 202 of the receiving member 200, as in that arrangement the receiving member 100 was hung on the retaining member 100. In this arrangement the retaining member 100 is hung on the receiving member 200, and thus the receiving member 200 is oriented such that the accommodating aperture 202 of the retaining member 200 is vertically below the wider aperture 206 of the receiving member 200.

In order to fasten the two members 100 and 200 so that the panel 600 is hung on the wall 602, the retaining member 100 is inserted through the top of flange 210 of the receiving member 200 into the wider aperture 206 of receiving member 200, and then movement of the retaining member 100 relative to the receiving member 200 is provided in a first direction, as described above.

Figure 6b illustrates a section view of retaining member 100 attached to a panel 600 and receiving member 200 attached to a wall 602 when the two members are fastened.

As was shown in Figure 5d, in Figure 6b the groove 104 of retaining member 100 is engaged with rib 208 of the receiving member 200, with the retaining member 100 being positioned within the accommodating aperture 202 of the receiving member 200. As described above the receiving member 200 is oriented in the panel such that the accommodating aperture 202 of the retaining member 200 is vertically below the wider aperture 206 of the receiving member 200, and the retaining member 100 thus hangs on the accommodating aperture 202 of the receiving member 200 which is fixed to the wall 602. The panel 600 is thus hung on the wall via retaining member 100, to which it is fixed.

As can be seen in Figure 6b, when the panel 600 and wall 602 are fastened using the retaining member 100 and receiving member 200, the top of the support element 212 of the receiving member 200, which is one of the abutting surfaces of the receiving member 200, abuts the panel 600. The space between the top of the flange 210 of the receiving member 200 and the top of the support element 212 ensures that the screws used to fix the receiving member 200 to the panel 400 do not contact the panel 600. Without this space the retaining member 100 and receiving member 200 would be more difficult to fasten as the screw heads in screw holes 214 and 216 would scrape the panel 600 and/or obstruct the fastening of the two members 100 and 200.

As can also be seen in Figure 6b, when the panel 600 and wall 602 are fastened using the retaining member 100 and receiving member 200, the top of the retaining member 100 abuts the wall 602. The recess 112 adjacent to the screw hole 110 of the retaining member 100 ensures that the screw used to fix the retaining member 100 to the panel 600 does not contact the wall 602. Without this the retaining member 100 and receiving member 200 would be more difficult to fasten as the screw head in screw hole 110 would scrape the wall 602 and/or obstruct the fastening of the two members 100 and 200.

As in the previous arrangement, the spacing of the rib 208 between both the top of the support element 212 and the bottom of the flange 210 of the receiving member 200 allows the retaining member 100 and receiving member 200 to be attached easily without the need for careful attention to whether their screws scrape the panel 400 or wall 402 and/or obstruct the fastening of the two members 100 and 200.

The fixing set is thus easily used to fasten a panel and a substrate, such as a wall, together.

The receiving member can thus be attached to an object in one of two configurations: a first configuration where the top of the flange 210 is abutted to a surface on a first object whilst the top of the support element 212 may also abutted to a surface in a recess on the first object, or a second configuration where the bottom of the flange 210 can be abutted to a surface on a first object.

In order to hang one object on another object, e.g. a panel on a wall, either the retaining member 100 can be fixed to the wall and the receiving member 200 can be fixed to the panel, with the receiving member 200 oriented such that the wider aperture 206 of the retaining member 200 is vertically below the accommodating aperture 202 of the receiving member 200, or the receiving member 200 can be fixed to the wall and the retaining member 100 can be fixed to the panel, with the receiving member 200 oriented such that the accommodating aperture 202 of the retaining member 200 is vertically below the wider aperture 206 of the receiving member 200.

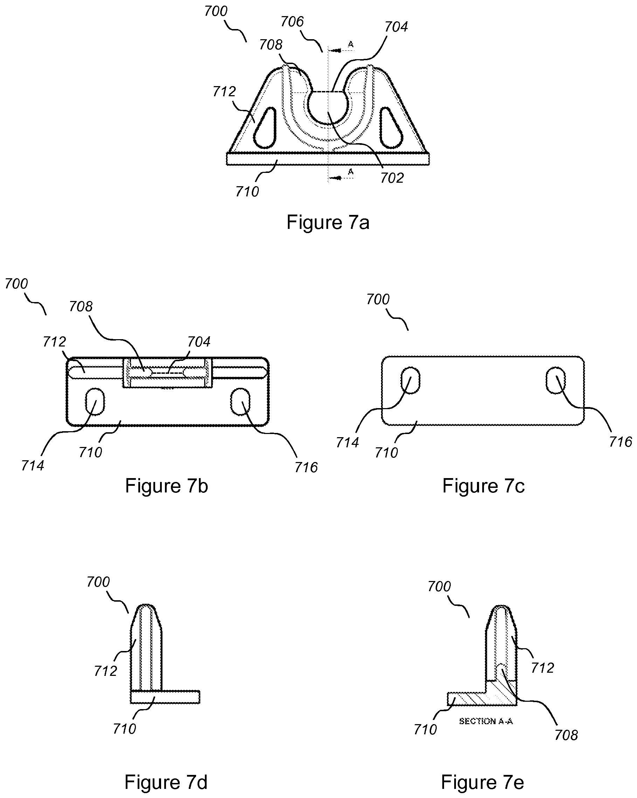

A second embodiment will now be described with reference to Figures 7 to 9.

In the second embodiment the rib of the receiving member is formed in a plane in the receiving member which is perpendicular to the at least one abutting surface of the receiving member, rather than in a plane in the receiving member which is parallel to the at least one abutting surface of the receiving member as in the first embodiment.

As in the first embodiment a rib is mounted on a support element. The rib is in this embodiment formed in the same plane as the support element and projects inwards to form an accommodating aperture (equivalent to the accommodating aperture 202 of the first embodiment). The rib also comprises one or more elastically moveable elements shaped to provide an opening which is of reduced width compared to the width of the accommodating aperture, as in the first embodiment.

Figures 7a to 7e illustrate different views of the receiving member 700 according to the second embodiment.

Figure 7a illustrates a front side elevation view of the receiving member 700 according to the second embodiment. This view shows the support element 712 of the receiving member 700 rising perpendicularly from the flange 710. The rib 708 mounted on the support element 712 can be seen forming the accommodating aperture 702 and the reduced-width opening 704.

Figure 7b illustrates a top side elevation view of the receiving member 700 according to the second embodiment. This view shows the top side of flange 710 and the support element 712 rising perpendicularly from the top side of the flange 710. The rib 708 mounted in the support element 710 and the reduced-width opening 704 are also shown in this view. The flange 710 of the receiving member 700 comprises fixing means in the form of two screw holes 714 and 716 that allow the bottom side of the flange 710, which is an abutting surface of the receiving member 700 to be fixed to another surface (e.g. by screwing the receiving member 700 onto that surface using screws that are screwed through the screw holes 714 and 716).

Figure 7c illustrates a bottom side elevation view of the receiving member 700 according to the second embodiment. This view shows the bottom side of flange 710 and the screw holes 714 and 716.

Figure 7d illustrates a right side elevation view of the receiving member 700 according to the second embodiment. This view shows the support element 712 of the receiving member 700 rising perpendicularly from the flange 710.

Figure 7e illustrates a section view of receiving member 700 through the line marked "A" in Figure 7a. This view shows the rib 708 mounted on the support element 712 of the receiving member 700, and the flange 710 of the receiving member 700.

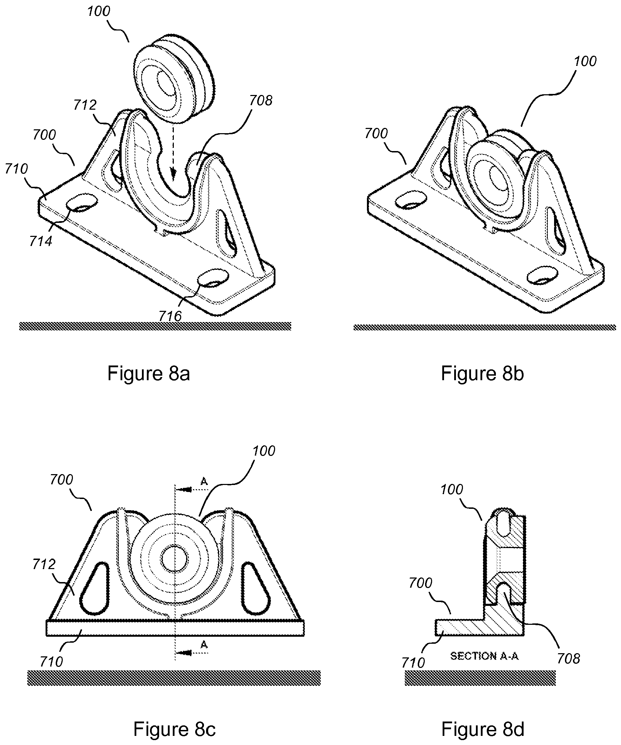

The fastening of the retaining member 100 and receiving member 700 according to the second embodiment will now be described with reference to views illustrated in Figures 8a to 8d.

Figure 8a illustrates a perspective elevation view of the retaining member 100 and receiving member 200.

In Figure 8a the dashed arrow 800 indicates the relative movement between the retaining member 100 and receiving member 700 that is required to fasten the two members, according to the second embodiment. As shown by dashed arrow 700 the two members may be fastened by aligning the groove 104 of the retaining member 100 with the rib 708 of the receiving member 700, and then providing movement of the retaining member 100 relative to the receiving member 700 in a first direction, such that the groove 104 of the retaining member 100 passes through the reduced-width opening 704 of the receiving member 700. Note that the axis of retaining member 100 is substantially perpendicular to the plane in which the rib 708 is formed once the retaining member 100 has passed through the reduced-width opening 704 of the receiving member 700. The rib 708 of the receiving member 700 is thus slideably insertable into the groove 104 of the retaining member 100 by movement of the retaining member 100 relative to the receiving member 200 in a first direction.

Once the two members have been fastened as described above the groove 104 of the retaining member 100 is engaged with the rib 708 of the receiving member 700 such that the retaining member 100 lies within the accommodating aperture 702 of the receiving member 200. The position of the retaining member 100 within the receiving member 700 is illustrated in perspective elevation view in Figure 8b and in a front elevation view in Figure 8c.

Note that once the retaining and receiving members 100 and 700 have been fastened as described above further movement of the retaining member 100 relative to the receiving member 700 in the first direction is not possible as the two members are resting against each other, with the retaining member 100 in the accommodating aperture 702 of the receiving member 700. One of the members can thus be used to support the other, as will later be described.

Once the retaining member 100 and the receiving member 700 have been fastened as described above the one or more elastically moveable elements of the rib 708 inhibit the passage of the retaining member 100 back through the reduced-width opening of the receiving member 700, i.e. they inhibit the passage of the retaining member 100 in a second direction opposite to the first direction described above. Although the passage of the retaining member 100 in the second direction is inhibited, the retaining member 100 may still be moved in this direction if sufficient relative force is applied to the two members. Thus the two members can be unfastened by providing sufficient relative force in order to move the retaining member 100 in the second direction (opposite to the first direction).

Figure 8d illustrates a section view of retaining member 100 and receiving member 700 when fastened, the section being through the line marked "A" in Figure 8c. As can be seen in this view the groove 104 of retaining member 100 is engaged with rib 708 of the receiving member 700, with the retaining member 100 being positioned within the accommodating aperture 702 of the receiving member 700.

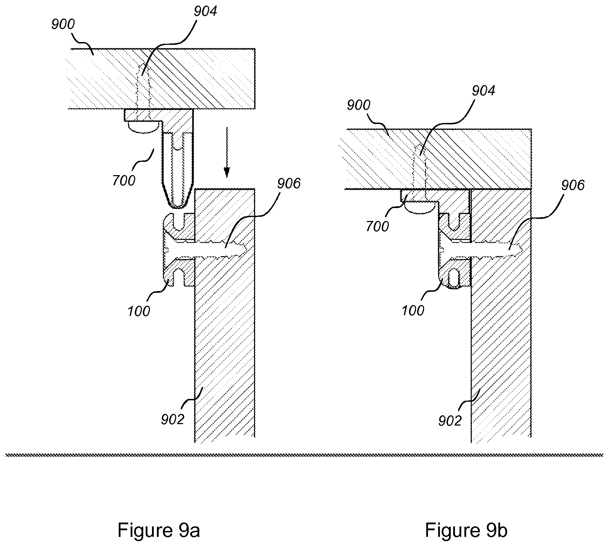

The two members of the fixing set can be used to fasten a panel and a substrate together, as summarised above. The fastening of a first panel 900 and a second panel 902 via the retaining member 100 and the receiving member 700 according to the second embodiment will now be described with reference to views illustrated in Figures 9a and 9b.

Figure 9a illustrates a section view of receiving member 700 attached to a first panel 900 and retaining member 100 attached to a second panel 902 when the two members are unfastened.

Receiving member 700 is fixed to first panel 900 such that the bottom side of the flange 210 of the receiving member 700, which is an abutting surfaces of the flange 710 of the receiving member 700, is fixed to panel 900. The receiving member 700 is fixed to first panel 900 via two screws 904 that are screwed into first panel 900 through the screw holes 714 and 716 or the receiving member 700. The heads of these two screws 904 rest on top of the top of the flange 710.

Retaining member 100 is fixed to second panel 902 via a screw 906 that is screwed into second panel 902 through the screw hole 110 of the retaining member 100. The head of screw 906 rests in the recess 112 in the top of the retaining member 100. The bottom of retaining member 100, which forms the abutting surface of the retaining member 100, is thus fixed to second panel 902.

In order to support the first panel 900 when attached to second panel 902 via the fixing set, the receiving member 700 is oriented in the panel 900 such that the accommodating aperture 702 of the retaining member 700 is vertically above the retaining member 100, as illustrated in Figure 7a.

In order to fasten the two members 100 and 700 so that the panels 900 and 902 are attached, movement of the retaining member 100 relative to the receiving member 200 is provided in a first direction, as described above.

Figure 9b illustrates a section view of receiving member 700 attached to a first panel 900 and retaining member 100 attached to a second panel 902 when the two members are fastened.

As was shown in Figure 8d, in Figure 9b the groove 104 of retaining member 100 is engaged with rib 708 of the receiving member 700, with the retaining member 100 being positioned within the accommodating aperture 702 of the receiving member 700. As described above the receiving member 700 is oriented in the panel such that the accommodating aperture 702 of the retaining member 700 is vertically above the retaining member 100, and the accommodating aperture 702 of the receiving member 700 is thus supported from underneath by the retaining member 100 which is fixed to the second panel 902. The first panel 900 is thus supported from underneath via receiving member 700, to which it is fixed.

In both the first and second embodiments described above the retaining member and receiving member of the fixing set can be of relatively small size in order to allow a panel and a substrate to be fastened close together. For example the width of the rib of the receiving member, perpendicular to the plane in which the rib is formed, may be less than 10mm, preferably less than 5mm, and in a preferred embodiment is approximately 3mm.

Additionally the width of the groove of the retaining member, perpendicular to the plane in which the groove is formed, may be substantially equal to the width of the rib of the receiving member, perpendicular to the plane in which the rib is formed.

This allows the retaining member to have a low profile, e.g. less than 10mm and preferably approximately 7mm. In the first embodiment the receiving member 200 may also have a low profile of approximately the same size as the retaining member.

In both embodiments the fixing set provides a retaining force that inhibits the insertion and/or removal of the retaining member from the receiving member. This retaining force provides feedback when fastening and/or unfastening the fixing set, as once the retaining force has been exceeded the members will either have 'clicked' into place or out of the fastened position.

The above embodiments are to be understood as illustrative examples of the invention. Further embodiments of the invention are envisaged, as follows.

Whilst in the first embodiment described above the top of the support element 212 of the receiving member 200 abuts a surface in the recess of the panel 400 in Figure 4a, in an alternative embodiment the recess of the panel 400 may be deeper and/or the height of the support element 212 of the receiving member 200 may be smaller such that the top of the support element 212 does not abut a surface in the recess of the panel 400.

In an alternative to any preceding embodiment recesses in the flange of the receiving member and/or top of the retaining member may be provided for the heads of screws screwed into any screw holes of said members, where such recesses are not described above. In another alternative recesses in the flange of the receiving member and/or top of the retaining member may not be provided for the heads of screws screwed into any screw holes of said members, where such recesses are described above.

In an alternative to any embodiment a placement member may be provided to assist in establishing the placement of the retaining member on a first object in order to achieve a desired alignment of the first object with a second object to which it is to be fastened using said fixing set. The placement member may comprise a groove similar to that of the retaining member, and may preferably be of substantially the same size and shape as the retaining member.

In contrast to the retaining member however the placement member may comprise a spike on one of its sides instead of the screw hole 110. This spike may protrude from the bottom side (i.e. the abutting surface) of the placement member for example, e.g. from a substantially central point of the bottom side, and may protrude perpendicularly from the side of the placement member. Preferably the spike is positioned to coincide with the axis of the placement member (where the placement member is preferably substantially rotationally symmetric, similarly to the retaining member).

Once the receiving member has been fixed to the second object (using e.g. screws as described above), the placement member may be fastened to the receiving member in the same way as the retaining member would be fastened to the receiving member, e.g. by slideably engaging the placement member into the receiving member so that the groove of the placement member is engaged with the rib of the receiving member, the placement member thus being positioned in the accommodating aperture of the receiving member.

The placement member is thus located in the same position in the receiving member as the retaining member would be if the retaining member and receiving member were fastened. Preferably the placement member is oriented such that its spike projects away from the second object to which the receiving member is attached. In this way the second object can be aligned next to the first object in the position that it is desired that the first and second objects will remain in once fastened using the fixing set. Once aligned in this way, relative force can be applied to the two objects in order to cause the spike of the placement member to mark the first object. This mark can then be used to determine where to drill the screw hole in the first object that will be used to fasten the retaining member to the first object, so that the two objects can then be fastened by the retaining member and receiving member in the desired alignment.

In an alternative to the embodiment where a placement member is provided, a screw such as a grub screw or set screw can be screwed into the screw hole 110 of the retaining member 100 in order to provide a spike or similar projection that projects from the bottom side (i.e. the abutting surface) of the retaining member 100. The screw may comprise a thread that is wider than the screw hole 110 of the retaining member 100 so that the screw is held in place within the retaining member 100 once it has been screwed in (though it may later be unscrewed and removed as necessary). The retaining member 100 comprising the screw (e.g. grub screw) may thus be used in a similar way to the placement member as described in the embodiment above, e.g. in order to mark a first object so that the mark can later be used to determine where to drill a screw hole in the first object.

Whilst in the above embodiments the retaining member comprises a groove and the receiving member comprises a corresponding rib, it will be appreciated that alternatives to any of the above embodiments are envisioned where the retaining member comprises a rib and the receiving member comprises a corresponding groove. In such embodiments the rib of the retaining member may be located in place of the groove of the retaining member described in the above embodiments. Further, in such embodiments the groove of the receiving member may be located in place of the rib of the receiving member described in the above embodiments.

In an alternative to any preceding embodiment, the retaining member may comprise a flange connected to a narrower base portion that forms an abutting surface of the retaining member. In this embodiment a groove is formed between the flange and a first surface of an object when the retaining member is fixed to that object such that the abutting surface of the retaining member abuts the first surface.

In an alternative to any preceding embodiment, the screw holes e.g. 214 and 216 of the flange 210 of the receiving member 200 may each comprise a slot in the flange 210. In this way a screw hole 214 or 216 allows for a screw that is used to fix the bottom of the flange 210 to a surface (i.e. the head of the screw rests on the top of the flange 210) to have limited movement within the slot, which allows some adjustment of the position of the receiving member 200 relative to the position of the screw when the screw (and thus the receiving member 200) is fixed to the surface. If instead a screw is used to fix the top of the flange 210 to a surface (i.e. the head of the screw rests in the conical recess in the top of the flange 210 that is next to the screw hole) the screw will be centred within the screw hole by the conical recess, thus preventing adjustment of the position of the receiving member 200 relative to the position of the screw when the screw (and thus the receiving member 200) is fixed to the surface.

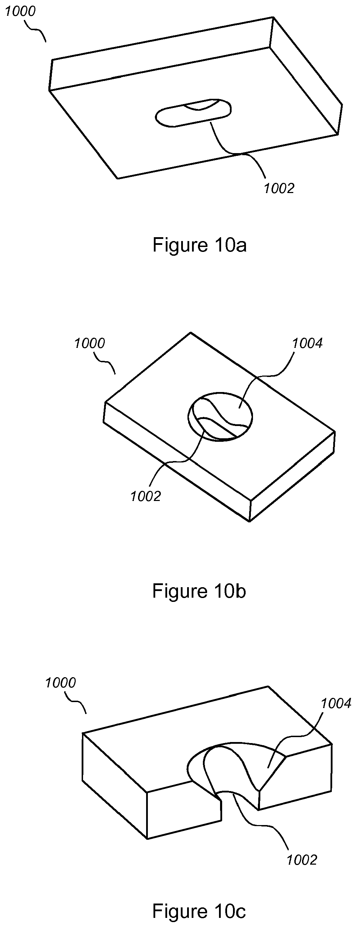

Figures 10a to 10c show bottom oblique, top oblique, and bottom oblique section views, respectively, of a portion 1000 of flange 210, according to this alternative. The portion 1000 of the flange 210 has a screw hole comprised of a slot 1002, with the top side of the flange 1000 shown in Figure 10b having a conical recess 1004 next to the screw hole 1002.

Whilst screws are used in the above embodiments to fix the retaining member and receiving member to other objects, it will be appreciated that alternative fixing means may be used. Such alternative fixing means may include one or more of adhesive, nails, nuts and bolts, rivets etc.

The receiving member is in preferred embodiments of the invention made of moulded plastic. Preferred embodiments have the receiving member formed by injection moulding. The plastic is preferably a Nylon plastic, for example Nylon Zytel ST801 which is an unreinforced, super tough polyamide 66. The retaining member, receiving member and placement member may also be made by injection moulding, and from the same, or a similar, material.

It will be appreciated that other materials may be used such as for example metal, including for example die cast metal e.g. zinc, and other plastic. Other moulding processes may be used, including for example pressure cast moulding, etc. Screw-fixing means may, or may not, be provided in the retaining and/or receiving members in these alternatives.

In an alternative to any preceding embodiment other marking points (e.g. in addition or alternative to marking points 222 and 224) may be provided on the receiving member 200 or 700 in order assist in the positioning of the receiving member onto a surface to which it is to be fixed. Marking points may for example be provided on the side of the flange 210 or 710 (e.g. that are aligned with the screw holes) and/or in the screw holes 215, 216 or 714, 716 of the receiving member in order to assist in marking the positions of the screw holes of the receiving member and/or the position of the receiving member. Marking points may for example be provided on the inside of the support element 210 of the receiving member 200 in order to assist in marking the position of the receiving member.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A secret panel fixing set for fixing a panel (400) to a substrate (402), the fixing set comprising:
a retaining member (100) and a receiving member (200) which is engageable with the retaining member (100),
wherein the retaining member (100) comprises:
an abutting surface (106), which is fixable to a surface of one of a substrate (402) and a panel (400) that are to be fastened together; and
one of a rib (208) and a groove (104), which is formed in a plane in the retaining member (100) which is parallel to the abutting surface (106) of the retaining member (100),
wherein the receiving member (200) comprises:
at least one abutting surface, which is fixable to a surface of the other one of the substrate (402) and the panel (400) that are to be fastened together;
the other one of the rib (208) and the groove (104); and
an aperture (202) for accommodating the retaining member,
wherein the rib (208) is slideably insertable into the groove (104) by movement of the retaining member (100) relative to the receiving member (200) in a first direction, and
wherein said other one of the rib (208) and the groove (104) comprises one or more elastically moveable elements (226, 228) shaped to provide an opening (204) which is of reduced width compared to the maximum width of the aperture (202), measured parallel to the opening, the reduced-width opening (204) being configured to provide a retaining force which inhibits the retaining member (100) from being moved relative to the receiving member (200) in a second direction, opposite to the first direction.

2. A secret panel fixing set according to claim 1, wherein the rib (208) has a width perpendicular to the plane in which the rib is formed, the width being less than 10mm.

3. A secret panel fixing set according to claim 2, wherein the width of the rib (208) is less than 5mm.

4. A secret panel fixing set according to any preceding claim, wherein the width of said one of the rib (208) and the groove (104), perpendicular to said plane in the retaining member (100), is substantially equal to the width of said other one of the rib and the groove perpendicular to said plane in the receiving member (200).

5. A secret panel fixing set according to any preceding claim, wherein the retaining member (100) comprises screw-fixing means for attachment of the retaining member (100) to one of the substrate (402) and the panel (400) via a screw.

6. A secret panel fixing set according to any preceding claim, wherein the groove (104) is an annular groove.

7. A secret panel fixing set according to any preceding claim, wherein the one or more elastically moveable elements (226, 228) of said other one of the rib (208) and the groove (104) are flexibly moveable to allow the reduced-width (204) opening to be momentarily increased in width, relative to the reduced width, when the retaining member (100) is inserted into the receiving member (200) and when the retaining member (100) is removed from the receiving member (200).

8. A secret panel fixing set according to any preceding claim, wherein the groove (104) is a substantially U-shaped in cross-section.

9. A secret panel fixing set according to claim 8, wherein the tip of the rib (208) is substantially convex in cross-section, the convex cross-section corresponding with the U-shaped cross-section of the groove (104).

10. A secret panel fixing set according to any preceding claim, wherein said other one of the rib (208) and the groove (104) is formed in a plane in the receiving member (200) which is parallel to the at least one abutting surface of the receiving member (200).

11. A secret panel fixing set according to any preceding claim, wherein said other one of the rib (208) and the groove (104) is formed in a plane in the receiving member which is perpendicular to the at least one abutting surface of the receiving member (200).

12. A secret panel fixing set according to any preceding claim, wherein the receiving member comprises a first abutting surface, which is, in a first fixing configuration of the receiving member (200), fixable to a surface of the other one of the substrate (402) and the panel (400) that are to be fastened together, and a second abutting surface, which is, in a second fixing configuration of the receiving member (200), fixable to a surface of the other one of the substrate (402) and the panel (400) that are to be fastened together, and wherein the rib (208) is slideably insertable into the groove (104) in both the first and second fixing configurations.

13. A secret panel fixing set according to claim 12, wherein the receiving member (200) comprises a flange (210) and a support element (212) which protrudes to one side of said flange (210) and which comprises a third abutting surface which is abuttable, in at least one of the first and second fixing configurations, against one of the substrate (402) and the panel (400).

14. A secret panel fixing set according to claim 13, wherein the support element (212) comprises a skirt inside which the rib (208) is located.

15. A secret panel fixing set according to claim 13 or 14, wherein the rib (208) is spaced from the third abutting surface by a distance which is approximately equal to a distance by which the rib (208) is spaced from the first abutting surface.

## Patentansprüche

1. Verborgenplattenbefestigungsset zum Befestigen einer Platte (400) auf einem Untergrund (402), wobei das Befestigungsset umfasst:
ein Halteelement (100) und ein Aufnahmeelement (200), das in Eingriff mit dem Halteelement (100) bringbar ist,
wobei das Halteelement (100) umfasst:
eine Anschlagfläche (106), die mit einer Oberfläche von einem von einem Untergrund (402) und einer Platte (400), die aneinander befestigt werden sollen, befestigbar ist, und
eines von einem Steg (208) und einer Nut (104), das in einer Ebene des Halteelements (100) gebildet ist, die parallel zur Anschlagfläche (106) des Halteelements (100) ist,
wobei das Aufnahmeelement (200) umfasst:
mindestens eine Aufnahmeoberfläche, die mit einer Oberfläche des anderen von dem Untergrund (402) oder der Platte (400), die aneinander befestigt werden sollen, befestigbar ist;
das andere von dem Steg (208) und der Nut (104); und
eine Aussparung (202) zur Aufnahme des Halteelements,
wobei der Steg (208) verschiebbar in die Nut (104) einsetzbar ist, durch Bewegung des Halteelements (100) relativ zum Aufnahmeelement (200) in einer ersten Richtung, und
wobei das andere von dem Steg (208) und der Nut (104) ein oder mehrere elastisch bewegbare Elemente (226, 228) umfasst, die geformt sind, um eine Öffnung (204) bereitzustellen, die eine reduzierte Breite, verglichen mit einer maximalen Breite der Aussparung (202), parallel gemessen zur Öffnung, aufweist, wobei die Öffnung (204) mit der reduzierten Breite eingerichtet ist, eine Haltekraft bereitzustellen, die das Halteelement (100) daran hindert, sich relativ zum Aufnahmeelement (200) in einer zweiten Richtung zu bewegen, die entgegen zur ersten Richtung ist.

2. Verborgenplattenbefestigungsset nach Anspruch 1, wobei der Steg (208) eine Breite senkrecht zur Ebene, in der der Steg gebildet ist, aufweist, wobei die Breite geringer als 10 mm ist.

3. Verborgenplattenbefestigungsset nach Anspruch 2, wobei die Breite des Stegs (208) geringer als 5 mm ist.

4. Verborgenplattenbefestigungsset nach einem der vorhergehenden Ansprüche, wobei die Breite des einen von dem Steg (208) und der Nut (104) senkrecht zur Ebene im Halteelement (100) im Wesentlichen gleich der Breite des anderen von dem Steg und der Nut senkrecht zur Ebene im Aufnahmeelement (200) ist.

5. Verborgenplattenbefestigungsset nach einem der vorhergehenden Ansprüche, wobei das Halteelement (100) Schraubenbefestigungsmittel zum Anbringen des Halteelements an einem von dem Untergrund (402) und der Platte (400) durch eine Schraube aufweist.

6. Verborgenplattenbefestigungsset nach einem der vorhergehenden Ansprüche, wobei die Nut (104) eine Ringnut ist.

7. Verborgenplattenbefestigungsset nach einem der vorhergehenden Ansprüche, wobei das eine oder die mehreren elastisch bewegbaren Elemente (226, 228) des einen von dem Steg (208) und der Nut (104) flexibel bewegbar sind, um der Öffnung (204) mit reduzierter Breite zu erlauben, vorübergehend in ihrer Breite relativ zur reduzierten Breite vergrößert zu werden, wenn das Halteelement (100) in das Aufnahmeelement (200) eingefügt wird und wenn das Halteelement (100) aus dem Aufnahmeelement (200) entfernt wird.

8. Verborgenplattenbefestigungsset nach einem der vorhergehenden Ansprüche, wobei die Nut (104) im Wesentlichen U-förmig im Querschnitt ist.

9. Verborgenplattenbefestigungsset nach Anspruch 8, wobei die Spitze des Stegs (208) im Wesentlichen konvex im Querschnitt ist, wobei der konvexe Querschnitt mit dem U-förmigen Querschnitt der Nut (104) übereinstimmt.

10. Verborgenplattenbefestigungsset nach einem der vorhergehenden Ansprüche, wobei das andere von dem Steg (208) und der Nut (104) in einer Ebene im Aufnahmeelement (200) gebildet ist, die parallel zur mindestens einen Anschlagfläche des Aufnahmeelements (200) ist.

11. Verborgenplattenbefestigungsset nach einem der vorhergehenden Ansprüche, wobei das andere von dem Steg (208) und der Nut (104) in einer Ebene im Aufnahmeelement gebildet ist, die senkrecht zu der mindestens einen Anschlagfläche des Aufnahmeelements (200) ist.

12. Verborgenplattenbefestigungsset nach einem der vorhergehenden Ansprüche, wobei das Aufnahmeelement eine erste Anschlagfläche aufweist, die in einer ersten Befestigungskonfiguration des Aufnahmeelements (200) mit einer Oberfläche des anderen von dem Untergrund (402) und der Platte (400), die miteinander befestigt werden sollen, befestigbar ist, und eine zweite Anschlagfläche, die in einer zweiten Befestigungskonfiguration des Aufnahmeelemenets (200) mit einer Oberfläche des anderen von dem Untergrund (402) und der Platte (400), die miteinander befestigt werden sollen, befestigbar ist, und wobei der Steg (208) in beiden von der ersten und zweiten Befestigungskonfiguartion verschiebbar in die Nut (104) einfügbar ist.

13. Verborgenplattenbefestigungsset nach Anspruch 12, wobei das Aufnahmeelement (200) einen Flansch (210) und ein Halteelement (212), das sich auf eine Seite des Flansches (210) erstreckt, umfasst und das eine dritte Anschlagfläche umfasst, die zumindest in einer von der ersten und zweiten Befestigungskonfiguration gegen eines von dem Untergrund (402) und der Platte (400) anlegbar ist.

14. Verborgenplattenbefestigungsset nach Anspruch 13, wobei das Halteelement (212) eine Schürzeninnenseite aufweist, in welcher der Steg (208) angeordnet ist.

15. Verborgenplattenbefestigungsset nach Anspruch 13 oder 14, wobei der Steg (208) von der dritten Anschlagfläche durch einen Abstand beabstandet ist, der im Wesentlichen gleich dem Abstand ist, durch den der Steg (208) von der ersten Anschlagfläche beabstandet ist.

## Revendications

1. Ensemble de fixation de panneau secret pour fixer un panneau (400) à un substrat (402), l'ensemble de fixation comprenant :
un élément de retenue (100) et un élément de réception (200) qui peut venir en prise avec l'élément de retenue (100),
dans lequel l'élément de retenue (100) comprend :
une surface de butée (106), qui peut être fixée à une surface d'un élément parmi un substrat (402) et un panneau (400) qui doivent être attachés ensemble ; et
un élément parmi une nervure (208) et une rainure (104), qui est formée dans un plan dans l'élément de retenue (100) qui est parallèle à la surface de butée (106) de l'élément de retenue (100),
dans lequel l'élément de réception (200) comprend :
au moins une surface de butée, qui peut être fixée à une surface de l'autre élément parmi le substrat (402) et le panneau (400) qui doivent être attachés ensemble ;
l'autre élément parmi la nervure (208) et la rainure (104) ; et
une ouverture (202) pour recevoir l'élément de retenue,
dans lequel la nervure (208) peut être insérée de manière coulissante à l'intérieur de la rainure (104) par déplacement de l'élément de retenue (100) par rapport à l'élément de réception (200) dans une première direction, et
dans lequel l'autre élément parmi la nervure (208) et la rainure (104) comprend un ou plusieurs éléments mobiles de manière élastique (226, 228) formés pour fournir une ouverture (204) qui a une largeur réduite comparativement à la largeur maximale de l'ouverture (202), mesurée en parallèle à l'ouverture, l'ouverture de largeur réduite (204) étant configurée pour fournir une force de retenue qui empêche le déplacement de l'élément de retenue (100) par rapport à l'élément de réception (200) dans une seconde direction, opposée à la première direction.

2. Ensemble de fixation de panneau secret selon la revendication 1, dans lequel la nervure (208) a une largeur perpendiculaire au plan dans lequel est formée la nervure, la largeur étant inférieure à 10 mm.

3. Ensemble de fixation de panneau secret selon la revendication 2, dans lequel la largeur de la nervure (208) est inférieure à 5 mm.

4. Ensemble de fixation de panneau secret selon l'une quelconque des revendications précédentes, dans lequel la largeur dudit un élément parmi la nervure (208) et la rainure (104), perpendiculaire au dit plan de l'élément de retenue (100), est essentiellement égale à la largeur dudit autre élément parmi la nervure et la rainure perpendiculaire au dit plan de l'élément de réception (200).

5. Ensemble de fixation de panneau secret selon l'une quelconque des revendications précédentes, dans lequel l'élément de retenue (100) comprend des moyens de fixation par vis pour une fixation de l'élément de retenue (100) à un élément parmi le substrat (402) et le panneau (400) par l'intermédiaire d'une vis.

6. Ensemble de fixation de panneau secret selon l'une quelconque des revendications précédentes, dans lequel la rainure (104) est une rainure annulaire.

7. Ensemble de fixation de panneau secret selon l'une quelconque des revendications précédentes, dans lequel le ou les éléments mobiles de manière élastique (226, 228) dudit un élément parmi la nervure (208) et la rainure (104) sont mobiles de manière souple de façon à permettre à l'ouverture de largeur réduite (204) d'augmenter momentanément en largeur, par rapport à la largeur réduite, lorsque l'élément de retenue (100) est inséré à l'intérieur de l'élément de réception (200) et lorsque l'élément de retenue (100) est retiré de l'élément de réception (200).

8. Ensemble de fixation de panneau secret selon l'une quelconque des revendications précédentes, dans lequel la rainure (104) a essentiellement une coupe transversale en forme de U.

9. Ensemble de fixation de panneau secret selon la revendication 8, dans lequel la coupe transversale de la pointe de la nervure (208) est essentiellement convexe, la coupe transversale convexe correspondant à la coupe transversale en forme de U de la rainure (104).

10. Ensemble de fixation de panneau secret selon l'une quelconque des revendications précédentes, dans lequel ledit autre élément parmi la nervure (208) et la rainure (104) est formé dans un plan de l'élément de réception (200) qui est parallèle à la ou aux surfaces de butée de l'élément de réception (200).

11. Ensemble de fixation de panneau secret selon l'une quelconque des revendications précédentes, dans lequel ledit autre élément parmi la nervure (208) et la rainure (104) est formé dans un plan de l'élément de réception qui est perpendiculaire à la ou aux surfaces de butée de l'élément de réception (200) .

12. Ensemble de fixation de panneau secret selon l'une quelconque des revendications précédentes, dans lequel l'élément de réception comprend une première surface de butée, qui peut, selon une première configuration de fixation de l'élément de réception (200), être fixée à une surface de l'autre élément parmi le substrat (402) et du panneau (400) qui doivent être attachés ensemble, et une deuxième surface de butée, qui peut, selon une seconde configuration de fixation de l'élément de réception (200), être fixée à une surface de l'autre élément parmi le substrat (402) et le panneau (400) qui doivent être attachés ensemble et dans lequel la nervure (208) peut être insérée de manière coulissante à l'intérieur de la rainure (104) à la fois dans la première et dans la seconde configuration de fixation.

13. Ensemble de fixation de panneau secret selon la revendication 12, dans lequel l'élément de réception (200) comprend une bride (210) et un élément de support (212) qui fait saillie vers un côté de ladite bride (210) et qui comprend une troisième surface de butée qui peut entrer en butée, dans au moins une configuration parmi la première et la seconde configuration de fixation, contre un élément parmi le substrat (402) et le panneau (400).

14. Ensemble de fixation de panneau secret selon la revendication 13, dans lequel l'élément de support (212) comprend un tablier à l'intérieur duquel est situé la nervure (208) .

15. Ensemble de fixation de panneau secret selon la revendication 13 ou 14, dans lequel la nervure (208) est espacée de la troisième surface de butée selon une distance qui est approximativement égale à une distance selon laquelle la nervure (208) est espacée de la première surface de butée.
